Europäisches Patentamt

European Patent Office

Office européen des brevets

(19)

(11) EP 1 702 868 A1

(12) EUROPEAN PATENT APPLICATION

(43) Date of publication:
20.09.2006 Bulletin 2006/38

(51) Int Cl.:
B65G 15/62 (2006.01)　　　B65G 21/22 (2006.01)

(21) Application number: 06380051.0

(22) Date of filing: 16.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 16.03.2005 ES 200500611

(71) Applicant: Multiscan Technologies S.L.
03804 Alcoy - Valencia (ES)

(72) Inventors:
• Rufino Valor, Juan Ramon
03804 Alcoy - Alicante (ES)

• Val Olmen, Simon
03804 Alcoy - Alicante (ES)
• Alberola Coloma, Alfredo
03804 Alcoy - Alicante (ES)
• Alberola Coloma, Javier
03804 Alcoy - Alicante (ES)
• Soler Esteban, Alvaro
03804 Alcoy - Alicante (ES)

(74) Representative: Carvajal y Urquijo, Isabel et al
Clarke, Modet & C.
C/ Goya, 11
E-28001 Madrid (ES)

(54) **Belt conveyor**

(57) The present invention relates to a belt conveyor comprising a conveyor belt including a feed section (1) and a return section (2), separated by curved sections (3) with an axis that is perpendicular to the feed direction of the belt. The curved surface (11) located at the end of the feed section (1) has a variable radius, of decreasing value.

FIG. 4

EP 1 702 868 A1

**Description**

The present invention relates to a belt conveyor comprising a belt defining a feed section and a return section, separated by curved surface sections with an axis that is perpendicular to the feed direction.

In conveyors of the type set forth the belt may be formed by a continuous belt or by a roller belt.

In the first case the belt is usually assembled between two parallel cylindrical rollers, one of which at least is a drive roller, rollers which determine the curved surface sections separating the feed and return sections, these surfaces having cylindrical curvatures of a constant radius in each section.

When the conveyor is formed by a roller belt, the feed and return sections are also separated by curved sections with cylindrical surfaces, of a constant radius in each section, since the belt is assembled between side guides defining this curvature.

With said constitution, when the product transported by the belt reaches the end of the feed section, it experiences instability that causes an unequal output path.

This problem is due to the fact that when the curve at the end of the feed section of the belt begins, either because the belt has a certain thickness or simply because the centre of mass of the product is above the surface of the belt, at a certain distance therefrom that increases with the volume of the products being transported, the radius of the outer surface of the belt, in the first case, or of the centre of mass in the second, exceeds the radius of curvature of the inner surface of the belt, which causes a sudden increase in speed transmitted to the product, the speed of which will depend on the ratio of the aforementioned radiuses.

This circumstance is a great problem, especially for certain products, especially small fruits such as olives, lupin seeds, etc.

The object of the present invention is to eliminate the problems set forth by means of a belt conveyor in which the curved section of the belt located after the feed section does not cause an acceleration in the products being transported that exceeds a predetermined limit which will logically depend on the characteristics of the type of product to be transported. Normally, the acceleration limit will depend on the ability of the belt to transmit the acceleration to the product being transported, and this can be obtained empirically.

The object set forth is achieved, according to the present invention, by making the curved surface of the belt, located at the end of the feed section, be of variable radius, with a decreasing value, along a section that runs between the end of the planar surface and at least up to the point at which the transported product separates from the belt, falling off it.

The variation in curvature can be achieved by means of opposed side guides that serve as guide elements for the edges of the belt or as supports thereof.

Thus, the feed section of the belt goes from a planar surface to a variable radius curvature, with which it will be achieved that the acceleration due to the aforementioned difference in radiuses does not exceed a predetermined limit.

The variable curvature section will be maintained at least until the product separates from the belt, from where a curvature with constant radius can be used.

Additionally and to compensate for the acceleration of gravity, slight modifications may be introduced in the calculations of the curve in order to increase the variation in radius.

The features set forth will be better understood with the following description, made with reference to the attached drawings in which a non-limiting embodiment is shown.

In the drawings:

Figure 1 shows a partial side elevational view of a belt conveyor of traditional structure.
Figure 2 shows a possible elevational view of the curvature of the curved section located following the feed section of the belt, according to the invention.
Figure 3 shows a partial perspective view of a set of guides for a roller belt conveyor, structured according to the invention.
Figure 4 shows a partial longitudinal section of the set of guides taken along line IV-IV of Figure 3.
Figure 5 shows a cross section of one of the guides and supports of the belt, taken along section line V-V of Figure 4.

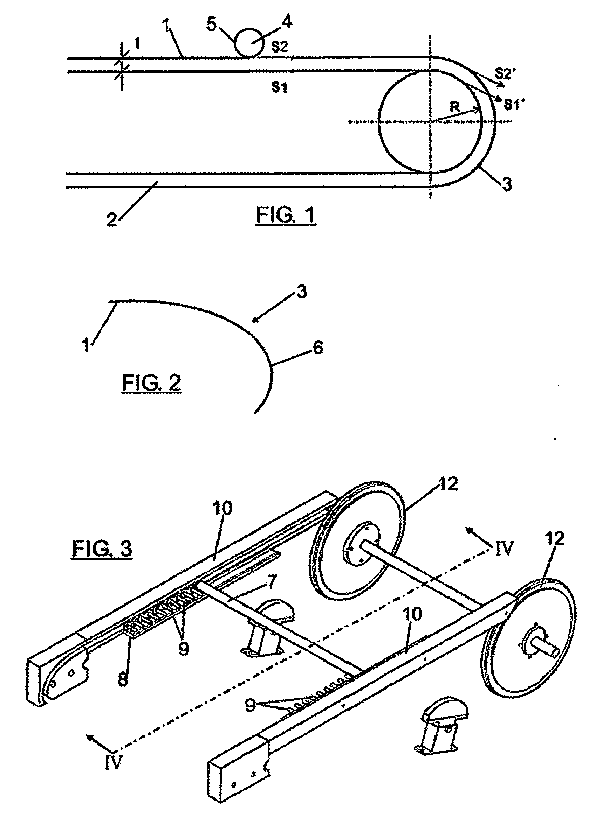

Figure 1 shows a partial longitudinal vertical section of a roller belt conveyor with a traditional structure in which the end portion of the feed section 1 of the belt, the initial portion of the return section 2 and the intermediate section 3 with a curved surface that starts at the end of the feed section 1 are shown. The intermediate section 3 has a cylindrical surface of constant radius and an axis that is perpendicular to the direction of movement of the belt.

With this structure, speed $S_2$ on the outer surface of the belt is the same as speed $S_1$ inside the belt along the feed and return sections. However, on the curved section 3, due to the thickness t of the belt or to the distance to the centre of mass 4 of the products 5 to be transported on the surface of the belt, the speed $S_2$, at an external point of the belt is different to the speed $S_1$ at the coinciding point of the inner surface of the belt. If the radius of the surface 3 is R, the speed $S_{2'}$ at a point of the outer surface on the curved section will be, taking into account that $S_{1'}$ is the same as $S_1$:

$$S_{2'} = \frac{(R + t) \times S_1}{R}$$

This assumes that when the curved section 3 of the belt begins, due to the thickness of the belt or to the distance between the centre of mass 4' and the surface of said belt, speed $S_{2'}$ is greater than speed $S_2$, which implies that a speed increase is transmitted to the transported products 5 when reaching this point.

In order to avoid this problem, according to the invention, the curved section 3 is configured as shown in Figure 2, with a curvature with variable radius from the end of the feed section 1, the curvature of radius being preferably decreasing. This variation in radius will occur at least between the end of feed section 1 of the belt and point 6 where the transported product separates from the belt, falling off it.

The curve represented in Figure 2 can vary, and additionally, to compensate the acceleration of gravity, slight modifications can be included in the calculation of said curve in order to increase radius variation.

Figures 3 to 5 show a possible embodiment of a conveyor structured according to the invention in which the belt consists in a roller belt 7, which rollers are assembled on end chains 8 the links of which have inner pivots 9, a roller 7 being assembled between every two opposed pivots. The chains 8 are assembled between two parallel side guides 10 which define, at the end of the feed section of the belt, a path 11 corresponding to the curvature with variable radius of Figure 2, according to the manner in which it has been calculated. On the opposite side, the belt can be assembled on a roller or on plates 12.

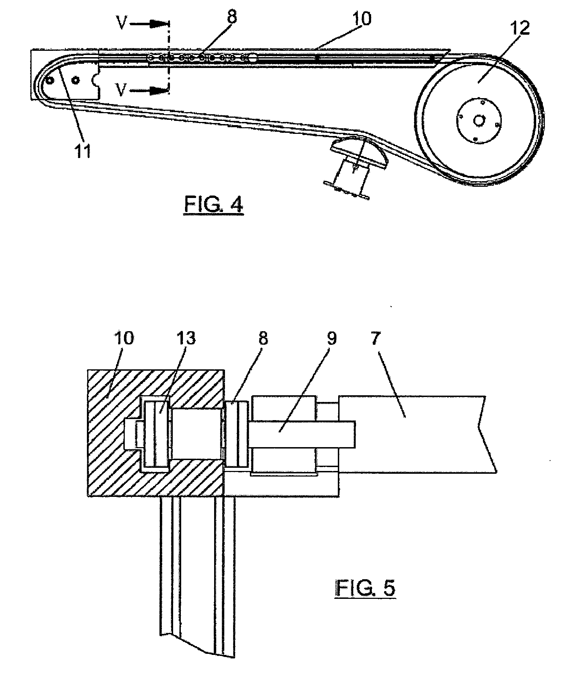

As can be seen in Figure 5, the chains 8 bear, towards the opposite side of the pivots 9, rollers or sheaves 13 that will run along the guides 10.

As can be understood, both the structure of the conveyor belt and the guiding system for it can vary, always maintaining a path 11 in the guiding system with which the curve calculated with a variable radius can be achieved, at least in the portion of the curved section that runs between the end of the straight section and the point at which the product separates from the belt, from which a curve with constant radius could be used.

**Claims**

1.   A belt conveyor comprising a conveyor belt including a feed section and a return section, separated by curved sections with an axis that is perpendicular to the feed direction of the belt, **characterised in that** the curved surface located at the end of the feed section has a variable radius, of decreasing value, along a portion that runs between the end of the planar surface of the feed section and at least up to the point at which the transported product separates from the belt, falling off it.

2.   A conveyor according to claim 1, **characterised in that** the curved surface of variable radius is defined by opposed side guides between which the edges of the belt or supports thereof are guided.

**FIG. 1**

**FIG. 2**

**FIG. 3**

FIG. 4

FIG. 5

**European Patent Office**

**EUROPEAN SEARCH REPORT**

Application Number

EP 06 38 0051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 934 513 A (KIRKPATRICK ET AL) 19 June 1990 (1990-06-19) * column 3, line 20 - line 30 * * figure 2 * ----- | 1 | INV. B65G15/62 B65G21/22 |
| X | US 5 314 057 A (CALVERT ET AL) 24 May 1994 (1994-05-24) * column 1, line 50 - column 2, line 42 * * figures 1-3 * ----- | 1,2 | |
| X | US 3 669 239 A (WALTER HARPER MARTIN) 13 June 1972 (1972-06-13) * column 2, line 8 - line 60 * * figures 1-4 * ----- | 1 | |
| | | | TECHNICAL FIELDS SEARCHED (IPC) B65G |

The present search report has been drawn up for all claims

| Place of search | Date of completion of the search | Examiner |
|---|---|---|
| The Hague | 15 June 2006 | Papatheofrastou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 38 0051

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2006

| Patent document cited in search report | | Publication date | Patent family member(s) | | Publication date |
|---|---|---|---|---|---|
| US 4934513 | A | 19-06-1990 | NONE | | |
| US 5314057 | A | 24-05-1994 | DE | 69411764 D1 | 27-08-1998 |
| | | | DE | 69411764 T2 | 03-12-1998 |
| | | | EP | 0608103 A1 | 27-07-1994 |
| | | | ES | 2118320 T3 | 16-09-1998 |
| | | | JP | 3556692 B2 | 18-08-2004 |
| | | | JP | 6298340 A | 25-10-1994 |
| US 3669239 | A | 13-06-1972 | NONE | | |

EPO FORM P0459

For more details about this annex : see Official Journal of the European Patent Office, No. 12/82